# EUROPEAN PATENT APPLICATION

(11) **EP 4 177 037 A1**
(43) Date of publication of application: **10.05.2023**
(21) Application number: 21940030.6
(22) Date of filing: 21.09.2021
(51) Int. Cl.: B29C 45/38, B29C 45/44, B29C 33/44

(54) **MOLDING DIE, SLIDE MEMBER, SLIDE UNIT**

(71) Applicant: Technocrats Corporation, Hiroshima-shi, Hiroshima 732-0824 (JP)
(72) Inventor: The designation of the inventor has not yet been filed
(74) Representative: Slingsby Partners LLP
(86) International application number: PCT/JP2021/034449
(87) International publication number: WO 2023/047435

(57) **Abstract**

A molding mold (1) in which gates are provided at outlets of runners (Ra and Rb) and connected to cavity portions and a molding material is fed from inlets of the runners (Ra and Rb) to fill the cavity portions to mold molded products (Pa and Pb) includes gate cutters (51a and 51b) attached so as to be able to advance/retract, and the gate cutters (51a and 51b) are attached such that advancing/retracting directions thereof intersect axes connecting the inlets and the outlets of the runners (Ra and Rb).

## Description

### BACKGROUND OF THE INVENTION

### (Field of the Invention)

The present invention relates to a molding mold including a sliding member such as a gate cutter and an undercut molding core.

### (Description of Related Art)

When an injection molding mold is used to take two molded products, runners and gates are usually arranged opposite to each other with a sprue located therebetween and the lengths and the shapes thereof are generally made to be the same such that the molding conditions are the same for each molded product (see, for example, Patent Document 1).

In an injection molding mold, a gate cutting mechanism for cutting a gate and an undercut processing mechanism for forming an undercut portion of a molded product are also often incorporated. A gate cutter for cutting a gate and a molding core for forming an undercut portion generally move in conjunction with mold opening or the like, and a gate is cut or an undercut is pulled before a molded product is taken out (see, for example, Patent Document 2).

Sliding members such as the gate cutter and the undercut molding core may be moved in a direction toward the sprue due to the configuration. In an injection molding mold including such sliding members which are moved in the direction toward the sprue, when two molded products are to be taken, the interval between the two molded products needs to be at least twice the movement distance of each sliding member such that the sliding members do not collide with each other or the sliding members do not collide with the sprue.

### [Related Document]

### [Patent Document]

[Patent Document 1] Japanese Laid-Open Utility Model Publication No. H5-58247
[Patent Document 2] WO2019/211924

### SUMMARY OF THE INVENTION

Nowadays, there is a high demand for making an injection molding mold to be compact. However, in a conventional injection molding mold for taking two molded products, the interval between the two molded products has to be large due to the structure, so that it is difficult to make the injection molding mold to be compact. Even in an injection molding mold for taking one molded product, if a sliding member needs to be slid toward a sprue due to the structure, the distance between the molded product and the sprue needs to be large such that the sliding member does not collide with the sprue, so that it is difficult to make the injection molding mold to be compact. These problems are common to other molding molds including runners such as a die-casting mold.

An object of the present invention is to provide a compact molding mold, and a sliding member and a sliding unit that are incorporated and used in the molding mold.

The present invention is directed to a molding mold in which a gate is provided at an outlet of a runner and connected to a cavity portion, and a molding material is fed from an inlet of the runner to fill the cavity portion to mold a molded product, the molding mold including a sliding member attached to the molded product so as to be able to advance/retract, wherein the sliding member is attached such that an advancing/retracting direction thereof intersects an axis connecting the inlet and the outlet of the runner, and collision of the sliding member with another member or another sliding member is avoidable.

In the molding mold according to the present invention, the runner may be arranged such that the axis connecting the inlet and the outlet of the runner may be orthogonal to the molded product, and the sliding member may be attached such that the advancing/retracting direction thereof may be non-orthogonal to the molded product.

In the molding mold according to the present invention, when a distance in an X-axis direction between the inlet and the outlet of the runner is denoted by L₀, a movement amount of the sliding member is denoted by L, and a movement amount in the X-axis direction of the sliding member is denoted by Lx, the sliding member may satisfy a condition of L>L_{X}>L₀, L>L_{X}=L₀, or L>L₀>L_{X}.

In the molding mold according to the present invention, the runner may be arranged such that the axis connecting the inlet and the outlet of the runner may be non-orthogonal to the molded product, and the sliding member may be attached such that the advancing/retracting direction thereof may be orthogonal or non-orthogonal to the molded product.

In the molding mold according to the present invention, when a distance in an X-axis direction between the inlet and the outlet of the runner is denoted by L₀, a movement amount of the sliding member is denoted by L, and a movement amount in the X-axis direction of the sliding member is denoted by Lx, the sliding member may satisfy a condition of L=L_{X}>L₀.

In the molding mold according to the present invention, the number of the molded products to be taken may be one or more, the number of the runners attached for each molded product may be one or more, and the number of the sliding members attached for each molded product may be one or more.

In the molding mold according to the present invention, the molding mold may be an injection molding mold, the molding mold may include a sprue connected to the inlet of the runner, the number of the molded products to be taken may be two or more, the molded products may be arranged opposite to each other with the sprue located therebetween, or arranged at equal distances from the sprue with the sprue located therebetween, the number of the runners attached for each molded product may be one or more, and the number of the sliding members attached for each molded product may be one or more.

In the molding mold according to the present invention, the sliding member may be a molding core for forming an undercut portion of the molded product, a gate cutter for cutting the gate, or a tearing piece for tearing the gate.

In the molding mold according to the present invention, the number of the molded products to be taken may be two or more, the number of the sliding members attached for each molded product may be one or more, and when each sliding member draws a sphere with a farthest distance of the sliding member before and after movement as a radius and with an endpoint on the runner outlet side of the sliding member before movement as a center point, the spheres drawn on the basis of the respective sliding members may overlap each other, and the respective sliding members may not interfere with each other before, during, and after movement.

In the molding mold according to the present invention, the advancing/retracting direction of the sliding member may intersect a direction in which the molding material remaining at the gate and/or the runner is taken out, and the sliding member may be moved to allow the molding material remaining at the gate and/or the runner to be taken out.

The present invention is directed to the sliding member or a sliding unit including the sliding member, the sliding member or the sliding unit being incorporated and used in the molding mold.

According to the present invention, it is possible to provide a compact molding mold, and a sliding member and a sliding unit that are incorporated and used in the molding mold.

### BRIEF DESCRIPTION OF THE DRAWINGS

Fig. 1 shows a plan view of a main part and a front view of a main part of a molding mold according to a first embodiment of the present invention;
Fig. 2 is a cross-sectional view of a main part of the molding mold according to the first embodiment of the present invention;
Fig. 3 shows cross-sectional views of a main part of the molding mold according to the first embodiment of the present invention;
Fig. 4 shows cross-sectional views of a main part of the molding mold according to the first embodiment of the present invention;
Fig. 5 shows schematic diagrams for describing a relationship between the movement amount of a gate cutter and the length of a runner of the molding mold according to the first embodiment of the present invention;
Fig. 6 is a diagram for describing the relationship between the movement of the gate cutter and the length of the runner of the molding mold according to the first embodiment of the present invention;
Fig. 7 is a cross-sectional view of a main part of a molding mold according to a second embodiment of the present invention;
Fig. 8 shows diagrams for describing the configuration of a drive means for a molding core of the molding mold according to the second embodiment of the present invention;
Fig. 9 shows diagrams for describing the configuration of the drive means for the molding core of the molding mold according to the second embodiment of the present invention;
Fig. 10 shows schematic diagrams for describing the configuration of a molding mold according to a third embodiment of the present invention and a relationship between the movement amount of a sliding member and the length of a runner thereof;
Fig. 11 shows schematic diagrams for describing the configuration of a molding mold according to a fourth embodiment of the present invention and a relationship between the movement amount of a sliding member and the length of a runner thereof;
Fig. 12 shows schematic diagrams for describing the configuration of a molding mold according to a fifth embodiment of the present invention and a relationship between the movement amount of a sliding member and the length of a runner thereof;
Fig. 13 is a plan view schematically showing the configuration of a molding mold according to a sixth embodiment of the present invention;
Fig. 14 shows schematic diagrams for describing the configuration of a molding mold according to a seventh embodiment of the present invention and a relationship between the movement amount of a gate cutter and the length of a runner thereof; and
Fig. 15 is a schematic diagram for describing the configuration of a molding mold according to an eighth embodiment of the present invention and a relationship between the movement amount of a gate cutter and the length of a runner thereof.

### DESCRIPTION OF EMBODIMENTS

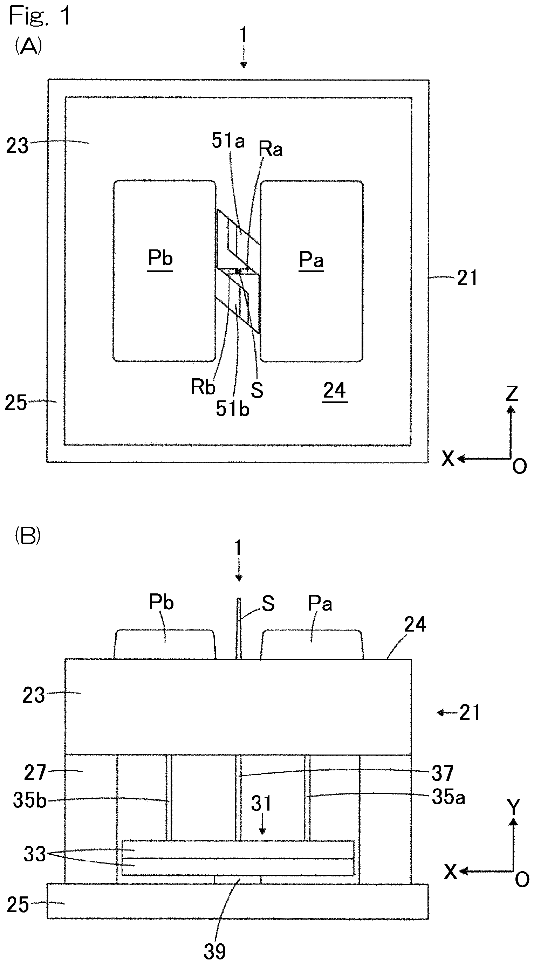

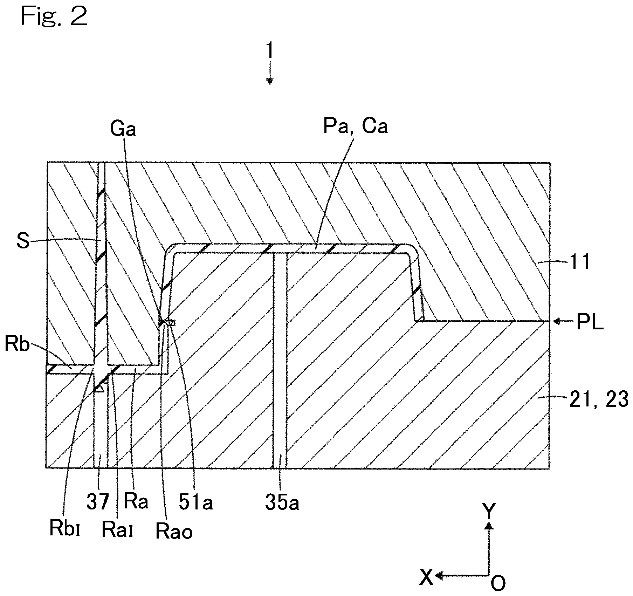

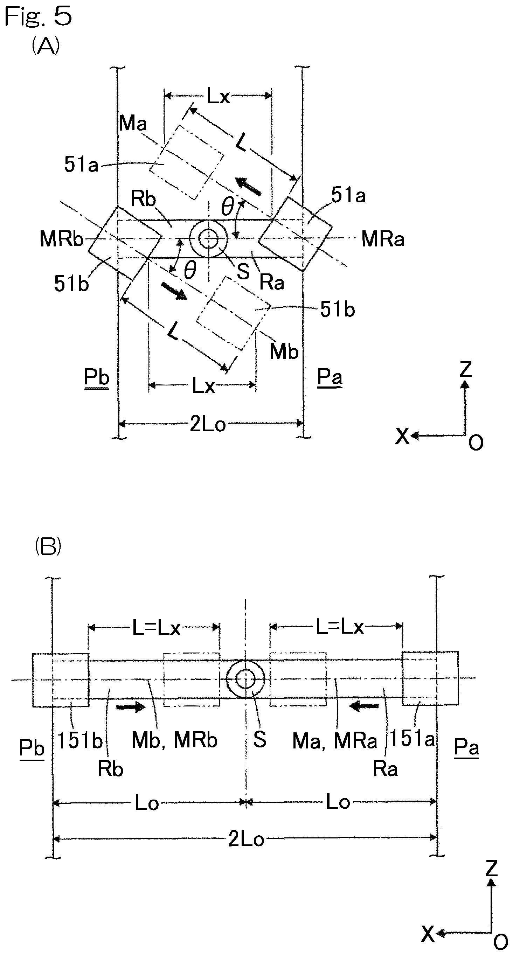

Fig. 1 shows a plan view of a main part and a front view of a main part of a molding mold 1 according to a first embodiment of the present invention, respectively. Fig. 1(A) is a plan view of the molding mold 1 from which a stationary die 11 is removed, and Fig. 1(B) is a front view of the molding mold 1 from which the stationary die 11 is removed. Fig. 2 to Fig. 4 are cross-sectional views of a main part of the molding mold 1 according to the first embodiment of the present invention. Fig. 5 shows schematic diagrams for describing a relationship between the movement amount of a gate cutter 51 and the length of a runner R of the molding mold 1 according to the first embodiment of the present invention.

In the drawings and the specification, X, Y, and Z axes coincide with the X, Y, and Z axes of three-dimensional orthogonal coordinates, respectively. X (X-axis), Y (Y-axis), and Z (Z-axis) directions coincide with the X-axis, Y-axis, and Z-axis directions of three-dimensional orthogonal coordinates, respectively. In addition, in the specification, a positive X direction means the direction of the arrow of the X axis shown in the drawings, and a negative X direction means a direction opposite to the arrow of the X axis. The same applies to a positive Y direction, a negative Y direction, a positive Z direction, and a negative Z direction.

The molding mold 1 according to the first embodiment of the present invention is an injection molding mold for taking two molded products. The molding mold 1 includes: a stationary die 11 for forming the outer surface side of a molded product P (Pa, Pb); a movable die 21 for forming the inner surface side of the molded product P; and a gate cutting mechanism for cutting a gate G. The movable die 21 includes: a movable-side die plate 23 having a core for forming the inner surface side of the molded product P; a movable-side attachment plate 25; a spacer block 27; two ejector base plates 33; an ejector pin 35 (35a, 35b); a sprue lock pin 37; and an ejector rod 39. The ejector base plates 33, the ejector pin 35, the sprue lock pin 37, the ejector rod 39, etc., cooperate together to form an ejector mechanism 31.

The molding mold 1 according to the present embodiment is an injection molding mold for taking two molded products, and therefore, the molding mold 1 includes the runner R (Ra, Rb) for feeding a molten resin to each of two molded products Pa and Pb. Inlets Ra_{I} and Rbi of two runners Ra and Rb are connected to a sprue S, and the gate G (Ga, Gb (not shown)) is provided at each of outlets Raₒ and Rbₒ (not shown) of the two runners Ra and Rb. The gates Ga and Gb are connected to cavity portions Ca and Cb (not shown), respectively.

The gate cutting mechanism is operable to cut the gates Ga and Gb connecting the molded products Pa and Pb and the runners Ra and Rb. The gate cutting mechanism includes: a gate cutter 51 (51a, 51b) for cutting the respective gates Ga and Gb; and a drive means (not shown) for moving the gate cutter 51 (51a, 5 1b). As the drive means, one using a spring 71, a gas spring, a hydraulic cylinder, an air cylinder, a magnetic force, or an elastic body, one using a mold opening force, one using the force of the ejector base plates 33, a combination of mold opening and the spring 71, one using a cam mechanism, etc., which will be described for a molding mold 2 according to a second embodiment, can be used.

The positional relationship between the molding mold 1 and the molded product P is as follows. In the molding mold 1, an upper surface 24 of the movable-side die plate 23 is parallel to a plane including the X axis and the Z axis (XZ plane). The ejector pin 35 (35a, 35b) and the sprue lock pin 37 are parallel to the Y axis, and the ejector base plates 33 advance/retract in the positive Y direction and the negative Y direction.

The gate cutter 51 advances/retracts parallel to the X axis in a front view, and in a direction intersecting the X axis and the Z axis in a plan view (see Fig. 1, Fig. 3 and Fig. 4). Here, the advancing/retracting directions (movement directions) of the gate cutters 51a and 51b are denoted by Ma and Mb, respectively.

The two molded products Pa and Pb are arranged so as to be bilaterally symmetric (in the X direction) about the sprue S. The two molded products Pa and Pb have the same shape and size, and are arranged such that a long-side direction thereof is parallel to the Z axis and a short-side direction thereof is parallel to the X axis in a plan view. Here, the same applies to the case where the molded products Pa and Pb are read as the cavity portions Ca and Cb, respectively.

The runners Ra and Rb are arranged so as to be bilaterally symmetric (in the X direction) about the sprue S. Here, a line connecting the inlet Ra_{I} and the outlet Raₒ of the runner Ra is defined as an axis MRa of the runner Ra, and a line connecting the inlet Rbi and the outlet Rbₒ of the runner Rb is defined as an axis MRb. The axes MRa and MRb are arranged parallel to the X axis in a plan view. In the positional relationship between the runners Ra and Rb and the molded products Pa and Pb, the axes MRa and MRb of the runners Ra and Rb are orthogonal to the molded products Pa and Pb (the long-side direction of the molded products Pa and Pb) in a plan view.

Therefore, the axes MRa and MRb of the runners Ra and Rb and the sprue S are arranged on a straight line in a plan view. The advancing/retracting direction Ma of the gate cutter 51a and the axis MRa of the runner Ra intersect each other, and the advancing/retracting direction Mb of the gate cutter 51b and the axis MRb of the runner Rb intersect each other. In addition, the sprue S is not located on the advancing/retracting direction Ma, Mb of the gate cutter 51 (see Fig. 1 and Fig. 5).

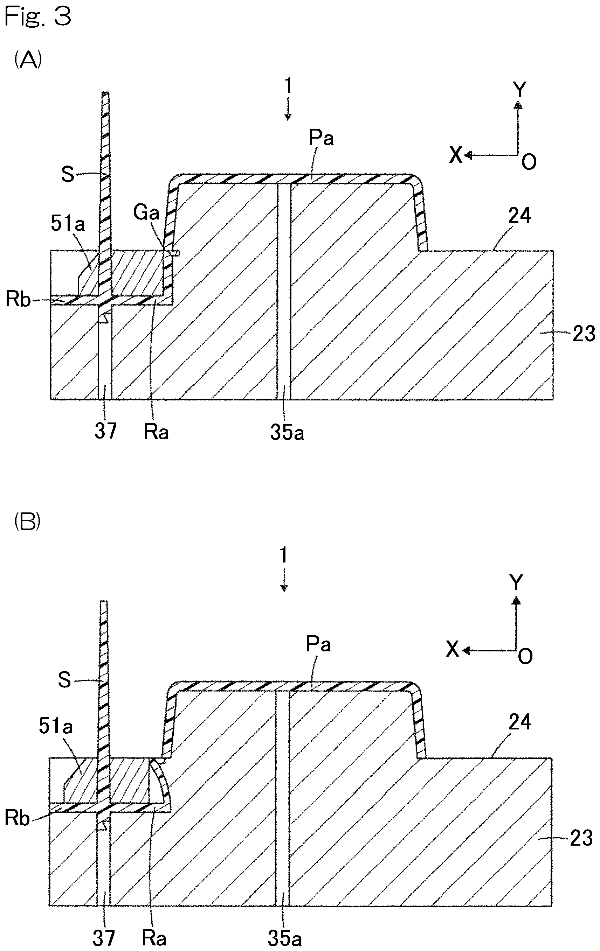

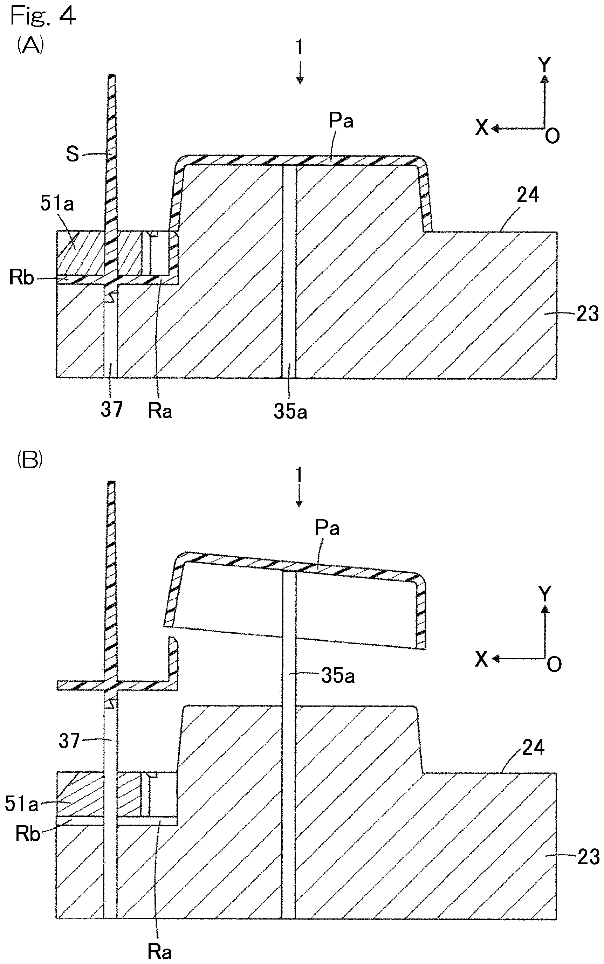

Similar to a known injection molding mold, in the molding mold 1 according to the first embodiment of the present invention as described above, parting surfaces (PL surfaces) of the stationary die 11 and the movable die 21 are fitted to each other to form a cavity portion C (Ca, Cb), and a molten resin is injected from an injection device, which is not shown, to fill the cavity portion C (Ca, Cb) from the sprue S through the runners Ra and Rb and the gates Ga and Gb (see Fig. 2). Then, after pressure-keeping and cooling steps, the mold is opened, the gate G (Ga, Gb) is cut, and the molded product P is taken out (see Fig. 3 and Fig. 4).

In the molding mold 1, the resin remaining at the gate G (Ga, Gb) and the runner R (Ra, Rb), when the molded product P is taken out, is pushed out by the sprue lock pin 37 and taken out from the movable die 21 (see Fig. 4(B)). In the present embodiment, the advancing/retracting directions Ma and Mb of the gate cutters 51a and 51b, which are sliding members, intersect the direction in which the resin remaining at the gate G (Ga, Gb) and the runner R (Ra, Rb) is pushed out, but the gate cutters 51a and 5 1b may be moved to take out the resin remaining at the gate G (Ga, Gb) and the runner R (Ra, Rb), from the mold.

Fig. 5(A) shows the relationship between the advancing/retracting directions and the movement amounts of the gate cutters 51a and 51b and the lengths of the runners Ra and Rb of the molding mold 1 according to the present embodiment. Fig. 5(B) illustrates a comparative example and shows the relationship between the movement directions and the movement amounts of gate cutters 151a and 151b and the lengths of the runners Ra and Rb when the gate cutters 151a and 151b are arranged such that the advancing/retracting directions Ma and Mb of the gate cutters 151a and 151b coincide with the axis MRa of the runner Ra and the axis MRb of the runner Rb, respectively. In the comparative example of Fig. 5(B), the advancing/retracting directions Ma and Mb of the gate cutters 151a and 151b are parallel to the axis MRa of the runner Ra and the axis MRb of the runner Rb, respectively, and the same applies to the case where the gate cutters 151a and 151b are arranged such that the gate cutters 151a and 151b collide with the sprue S when the gate cutters 151a and 151b are moved. In Fig. 5(A) and (B), the runners Ra and Rb are parallel to the X axis, and the lengths of the runners Ra and Rb (distances: distances between the inlets and the outlets thereof) are denoted by L₀.

As shown in Fig. 5(A), the movement amounts of the gate cutters 51a and 5 1b are denoted by L, an intersection angle between the advancing/retracting direction Ma of the gate cutter 51a and the axis MRa of the runner Ra is denoted by θ, and an intersection angle between the advancing/retracting direction Mb of the gate cutter 51b and the axis MRb of the runner Rb is denoted by θ. Each of movement amounts Lx in the X-axis direction of the gate cutters 51a and 51b is L·COSθ (Lx = L·COSθ). In the present embodiment, since there are no obstacles ahead in the movement directions of the gate cutters 51a and 51b, L_{X}>L₀ can be set. Therefore, each of the movement amounts L of the gate cutters 51a and 51b satisfies L>L_{X}>L₀. On the other hand, in the comparative example shown in 5B, each of the movement amounts L of the gate cutters 151a and 151b satisfies L=Lx, so that L=L₀ or L<L₀ is satisfied.

As described above, in the molding mold 1 according to the first embodiment, the gate cutters 51a and 51b are arranged such that the advancing/retracting direction Ma of the gate cutter 51a intersects the axis MRa of the runner Ra and the advancing/retracting direction Mb of the gate cutter 51b intersects the axis MRb of the runner Rb. Therefore, the length (distance) of the runner R and the interval between the molded product Pa and the molded product Pb arranged right and left, in other words, the interval between the cavity portion Ca and the cavity portion Cb, can be decreased. Accordingly, the molding mold 1 can be made compact.

In the present embodiment, the gate cutters 51a and 51b move in the same plane, that is, two-dimensionally, but depending on the molding mold, the gate cutters 51a and 51b may move three-dimensionally. Hereinafter, the relationship between the movement direction and the movement amount of the gate cutter 51 and the length of the runner R (Ra, Rb) in the case where the movement direction of the gate cutter 51 (51a, 51b) intersects the X axis, the Y axis, and the Z axis, will be described.

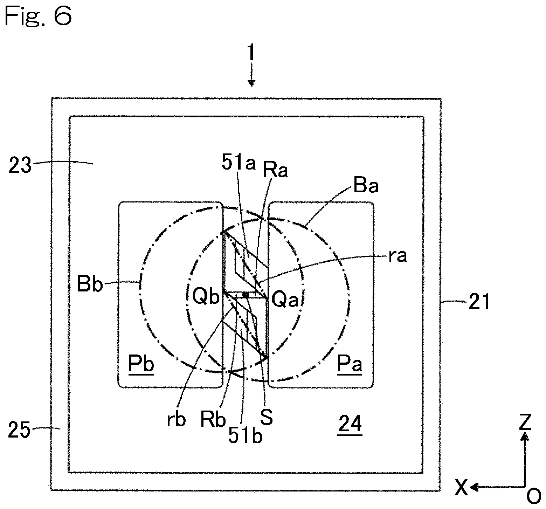

Fig. 6 is a diagram for describing the relationship between the movement direction of the gate cutter 51 and the length of the runner R in the case where the gate cutter 51 of the molding mold 1 according to the first embodiment moves three-dimensionally. The same components as in the molding mold 1 according to the first embodiment shown in Fig. 1 to Fig. 5 are denoted by the same reference numerals, and the description thereof is omitted.

In Fig. 6, a point Qa is the endpoint on the outlet side of the runner Ra of the gate cutter 51a before movement. A sphere Ba is drawn with the farthest distance of the gate cutter 51a before and after movement as a radius ra and with the point Qa as a center point. Similarly, in Fig. 6, a point Qb is the endpoint on the outlet side of the runner Rb of the gate cutter 5 1b before movement. A sphere Bb is drawn with the farthest distance of the gate cutter 51b before and after movement as a radius rb and with the point Qb as a center point. The sphere Ba represents a possible trajectory of the gate cutter 51a before and after movement, and the sphere Bb represents a possible trajectory of the gate cutter 51b before and after movement.

In the molding mold 1 shown in Fig. 6, the possible trajectories of the gate cutter 51a and the gate cutter 5 1b before and after movement partially overlap each other, but the gate cutter 51a and the gate cutter 51b are arranged such that the gate cutter 51a and the gate cutter 51b do not interfere or collide with each other before, during, and after movement. Such a molding mold 1 can also be made compact by disposing the gate cutter 51 such that the advancing/retracting direction (movement direction) M of the gate cutter 51 intersects the axis MR connecting the inlet and the outlet of the runner R.

As described above, even if the sliding members move two-dimensionally or three-dimensionally, and the possible trajectories of the two or more sliding members before and after movement partially overlap each other, the sliding members are arranged such that the sliding members do not interfere or collide with each other before, during, and after movement. In this case, the molding mold can be made compact by arranging the sliding members such that the advancing/retracting direction (movement direction) M of each sliding member intersects the axis MR connecting the inlet and the outlet of the runner R. The same applies to the case where two or more sliding members are provided for one molded product P. In addition, the sliding members may be molding cores described later, and are not particularly limited.

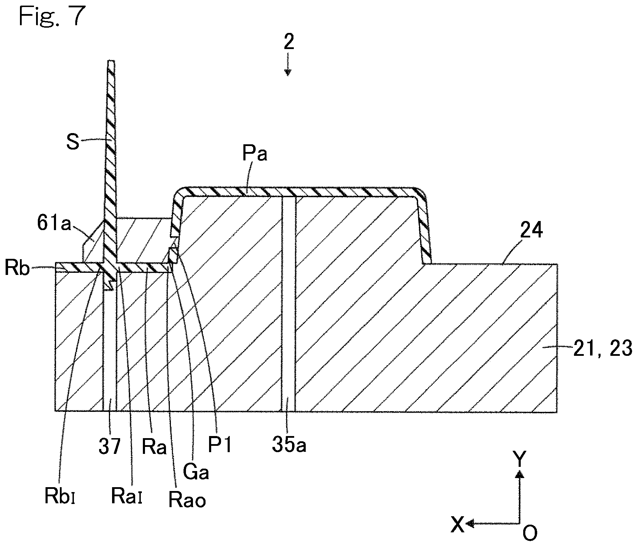

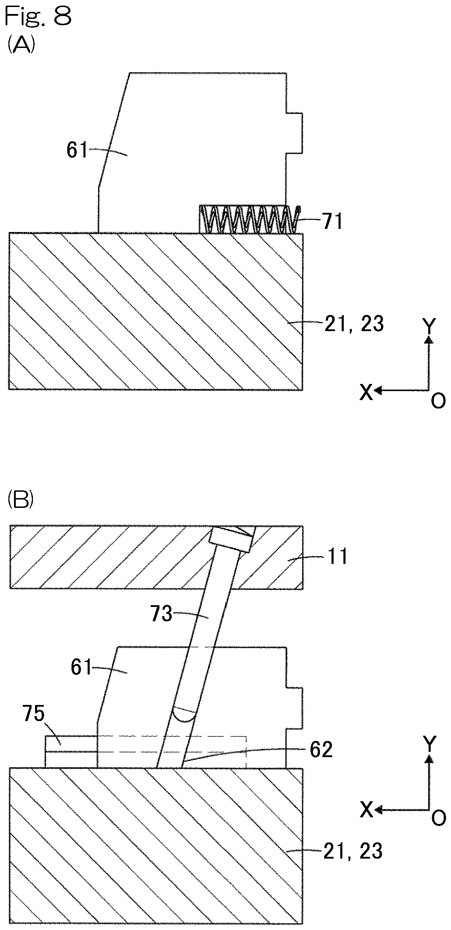

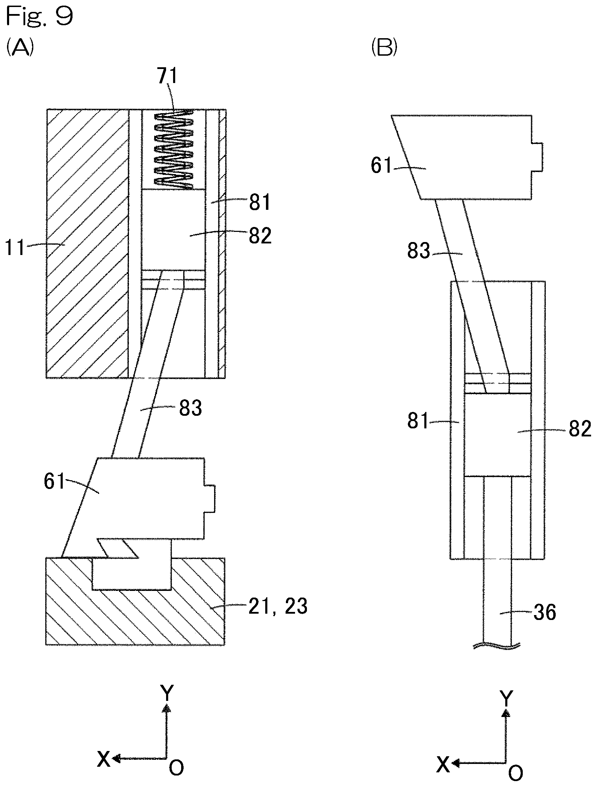

Fig. 7 is a cross-sectional view of a main part of the molding mold 2 according to the second embodiment of the present invention. Fig. 8 and Fig. 9 show diagrams for describing a drive means for moving a molding core 61. The same components as in the molding mold 1 according to the first embodiment shown in Fig. 1 to Fig. 5 are denoted by the same reference numerals, and the description thereof is omitted.

The molding mold 2 according to the second embodiment of the present invention is an injection molding mold, for taking two molded products, which includes an undercut processing mechanism for molding a molded product P having an undercut portion P1. The molding mold 2 according to the second embodiment is different from the molding mold 1 according to the first embodiment in that the undercut processing mechanism is included and a gate cutting mechanism is not included, but other than this point, the other configuration is the same as that of the molding mold 1 according to the first embodiment. In addition, the mold closing, the injection, the pressure keeping, the cooling, the mold opening, and the operation of taking out the mold product P in the molding mold 2 according to the second embodiment are basically the same as in the molding mold 1 according to the first embodiment.

The undercut processing mechanism forms the undercut portion P1 during molding of the molded product P (Pa, Pb), synchronizes with the ejector mechanism 31, and is removed from the undercut portion P1 when the molded product P is pushed out, thereby allowing the molded product P to be demolded from the molding mold 2. In the present embodiment, the undercut portion P1 is a hole provided in the molded product P, and an axis of the hole intersects the demolding direction of the molded product P (Y direction). The shapes of the molded product P and the undercut portion P1 are not particularly limited, and the undercut portion may be a protrusion.

The undercut processing mechanism includes the molding core 61 (61a, 61b) for forming the undercut portion P1, and the drive means for moving the molding core 61. The molding core 61 advances/retracts parallel to the X axis in the front view shown in Fig. 7, and in a direction intersecting the X-axis direction and the Z-axis direction in a plan view. The drive means for moving the molding core 61 is not particularly limited. Typical drive means are shown in Fig. 8 and Fig. 9.

Fig. 8(A) shows a drive means using the spring 71, and the drive means moves the molding core 61 parallel to the X axis by the pressing force of the spring 71. In the drive means, a gas spring, a hydraulic cylinder, an air cylinder, a magnetic force, or an elastic body may be used instead of the spring 71. In Fig. 8(B), an inclined pin 73 is attached to the stationary die 11, a hole 62 or a recess into which the inclined pin 73 is fitted so as to freely slide is provided in the molding core 61, and the molding core 61 is moved by using a mold opening force. A guide rail 75 which is parallel to the X axis is provided on the movable-side die plate 23, and the molding core 61 can be moved parallel to the X axis by sliding the molding core 61 along the guide rail 75.

As for the drive means shown in Fig. 9, the molding core 61 and the drive means are molded as a single unit. In Fig. 9(A), the molding core 61 is caused to advance/retract by using a mold opening force and the pressing force of the spring 71. In Fig. 9(B), the molding core 61 is caused to advance/retract by using the force of the ejector base plates 33.

The undercut processing mechanism in Fig. 9(A) has: a holder 81 which is attached to the stationary die 11; a retaining piece 82 which is guided by the holder 81 and advances/retracts in the Y direction; and a sliding piece 83 which is coupled to the retaining piece 82 so as to freely slide, and the molding core 61 is attached to a distal end of the sliding piece 83. The spring 71 is mounted so as to push down the retaining piece 82. The holder 81 has an inclined guide for guiding the sliding piece 83 in the X direction and the Y direction, and the retaining piece 82 is pushed down in the negative Y direction along with mold opening, thereby causing the molding core 61 to move in the positive X direction.

The undercut processing mechanism in Fig. 9(B) has: a holder 81 which is attached to the movable die 21; a retaining piece 82 which is guided by the holder 81 and advances/retracts in the Y direction; and a sliding piece 83 which is coupled to the retaining piece 82 so as to freely slide, and the molding core 61 is attached to a distal end of the sliding piece 83. The holder 81 has an inclined guide for guiding the sliding piece 83 in the X direction and the Y direction, and in conjunction with the ejector mechanism 31, the retaining piece 82 is protruded and pushed up in the positive Y direction by an ejector pin 36, thereby causing the molding core 61 to move in the positive X direction.

The drive means shown in Fig. 9(A) or (B) may move the molding core 61 via a cam, and may move the molding core 61 in the positive X direction and subsequently move the molding core 61, removed from the undercut portion P1, in another direction different from the positive X direction. That is, the drive means may move the molding core 61 in a first direction and a second direction. This can also be applied to the drive of the gate cutter 51 of the first embodiment.

The molding mold 2 according to the second embodiment as described above can be considered as a molding mold obtained by replacing the gate cutting mechanism of the molding mold 1 according to the first embodiment with an undercut processing mechanism. In the second embodiment, the molding cores 61a and 61b are arranged such that the advancing/retracting direction Ma of the molding core 61a intersects the axis MRa of the runner Ra in a plan view and, similarly, the advancing/retracting direction Mb of the molding core 61b intersects the axis MRb of the runner Rb in a plan view. Accordingly, the length (distance) of the runner R and the interval between the molded product Pa and the molded product Pb arranged right and left (in the X direction), in other words, the interval between the cavity portion Ca and the cavity portion Cb, can be shortened. Thus, the molding mold 2 can be made compact.

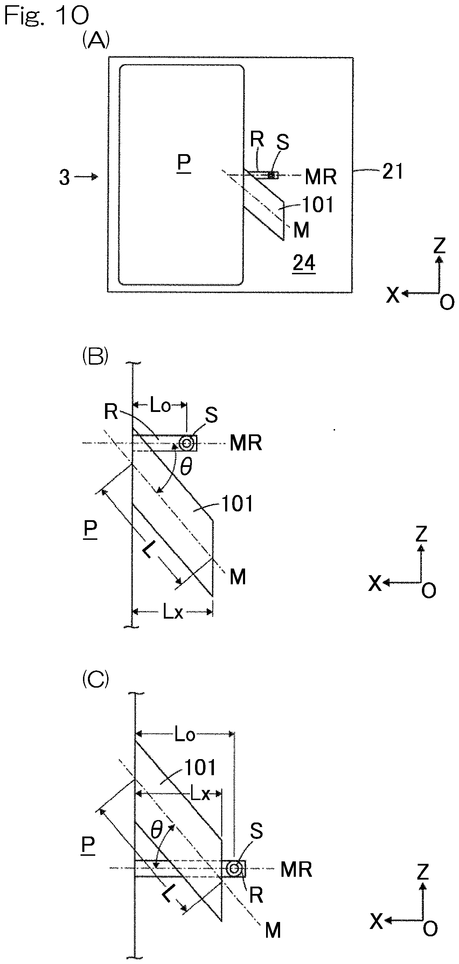

Figs. 10 shows schematic diagrams for describing the configuration of a molding mold 3 according to a third embodiment of the present invention and a relationship between the movement amount of the sliding member 101 and the length of the runner R thereof. Fig. 10(A) is a plan view schematically showing the configuration of the molding mold 3 according to the third embodiment of the present invention. Fig. 10(B) is a schematic diagram for describing the relationship between the movement amount of the sliding member 101 and the length of the runner R of the molding mold 3 according to the third embodiment of the present invention. Fig. 10(C) is a schematic diagram for describing a relationship between the movement amount of the sliding member 101 and the length of the runner R in a modification of the molding mold 3 according to the third embodiment of the present invention. The same components as in the molding mold 1 according to the first embodiment shown in Fig. 1 to Fig. 5 are denoted by the same reference numerals, and the description thereof is omitted.

The molding mold 3 according to the third embodiment is an injection molding mold for molding and taking one molded product P, and the advancing/retracting direction (movement direction) M of the sliding member 101 intersects the X axis and the Z axis in a plan view. Meanwhile, the axis MR of the runner R is parallel to the X-axis direction in a plan view. In the positional relationship between the runner R and the molded product P, the axis MR of the runner R is orthogonal to the molded product P (the long-side direction of the molded product P) in a plan view. The sliding member 101 moves in conjunction with mold opening or the like, and is not particularly limited. In the first embodiment, the gate cutter 51 corresponds to a sliding member, and in the second embodiment, the molding core 61 corresponds to a sliding member.

The relationship between the movement amount of the sliding member 101 and the length of the runner R of the molding mold 3 according to the third embodiment shown in Fig. 10(B) is the same as in Fig. 5. That is, the advancing/retracting direction M of the sliding member 101 and the axis MR of the runner R intersect each other at an intersection angle θ, and there are no obstacles ahead in the movement direction of the sliding member 101, so that the movement amount L of the sliding member satisfies L>L_{X}>L₀. Here, according to the use of the molding mold 3, L>L_{X}=L₀ or L>L₀>L_{X} can also be satisfied.

The molding mold shown in Fig. 10(C) is the same as the molding mold 3 according to the third embodiment shown in Figs. 10 (A) and (B), except that the sprue S is located ahead in the movement direction of the sliding member 101. In the molding mold shown in Fig. 10(C), the sprue S is an obstacle for the sliding member 101. In such a molding mold, the relationship between the movement amount of the sliding member 101 and the length (distance) of the runner R is L>L₀>L_{X}.

From the molding molds 1 and 3 according to the first embodiment and the third embodiment and the modifications thereof, in the case where the advancing/retracting direction M of the sliding member 101 and the axis MR of the runner R intersect each other, even if the number of molded products P to be taken is one or two or more, the length (distance) L₀ of the runner R can be smaller than the movement distance L of the sliding member 101. Accordingly, the molding mold can be made compact.

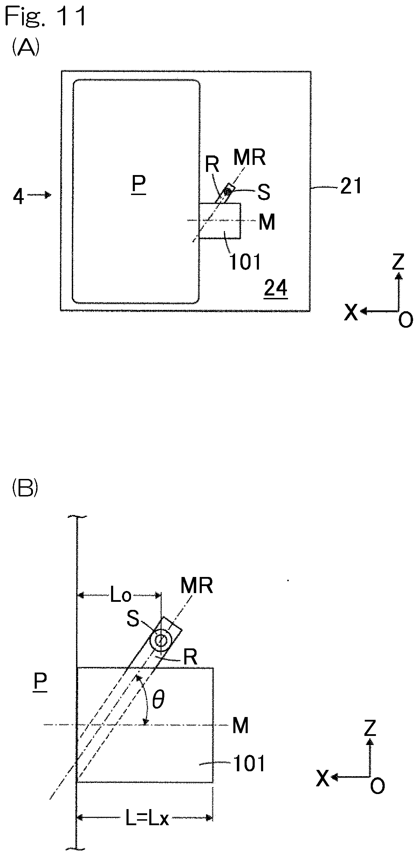

Fig. 11 shows schematic diagrams for describing the configuration of a molding mold 4 according to a fourth embodiment of the present invention and a relationship between the movement amount of the sliding member 101 and the length of the runner R thereof. The same components as in the molding mold 1 according to the first embodiment shown in Fig. 1 to Fig. 5 are denoted by the same reference numerals, and the description thereof is omitted. In the molding mold 4 according to the fourth embodiment, the advancing/retracting direction (movement direction) M of the sliding member 101 is parallel to the X axis in a plan view, and the axis MR of the runner R intersects the X axis and the Z axis in a plan view. The sliding member 101 is a member which moves in conjunction with mold opening or the like, and is not particularly limited. In the first embodiment, the gate cutter 51 corresponds to a sliding member, and in the second embodiment, the molding core 61 corresponds to a sliding member.

As for the relationship between the movement amount of the sliding member 101 and the length (distance) of the runner R of the molding mold 4 according to the fourth embodiment shown in Fig. 11, the advancing/retracting direction M of the sliding member 101 and the axis MR of the runner R intersect each other at an intersection angle θ, and there are no obstacles ahead in the movement direction of the sliding member 101, so that the movement amount L of the sliding member satisfies L=L_{X}>L₀. Also, in the molding mold in which the runner R is attached so as to be inclined with respect to the molded product P, and the sliding member 101 advances/retracts in a direction orthogonal to the molded product P as described above, since the advancing/retracting direction M of the sliding member 101 and the axis MR of the runner R intersect each other, the length (distance) L₀ of the runner R can be smaller than the movement distance L of the sliding member 101. Accordingly, the molding mold can be made compact.

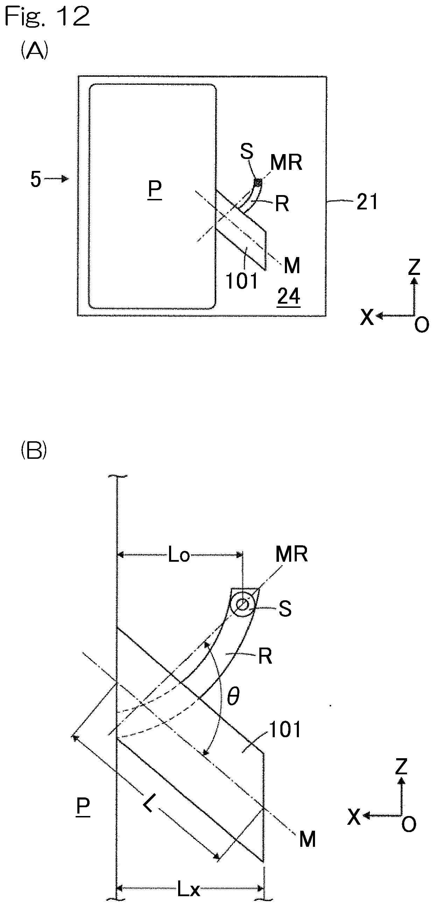

Fig. 12 shows schematic diagrams for describing the configuration of a molding mold 5 according to a fifth embodiment of the present invention and a relationship between the movement amount of the sliding member 101 and the length of the runner R thereof. The same components as in the molding mold 1 according to the first embodiment shown in Fig. 1 to Fig. 5 are denoted by the same reference numerals, and the description thereof is omitted. In the molding mold 5 according to the fifth embodiment, the runner R is curved in a plan view. The axis MR connecting the inlet and the outlet of the runner R and the advancing/retracting direction (movement direction) M of the sliding member 101 intersect the X axis and the Z axis in a plan view, and the advancing/retracting direction M of the sliding member 101 and the axis MR of the runner R intersect each other at an intersection angle θ. The sliding member 101 moves in conjunction with mold opening or the like, and is not particularly limited. In the first embodiment, the gate cutter 51 corresponds to a sliding member, and in the second embodiment, the molding core 61 corresponds to a sliding member.

As for the relationship between the movement amount of the sliding member 101 and the length (distance) of the runner R of the molding mold 5 according to the fifth embodiment shown in Fig. 12, the advancing/retracting direction M of the sliding member 101 and the axis MR of the runner R intersect each other at an intersection angle θ, and there are no obstacles ahead in the movement direction of the sliding member 101, so that the movement amount L of the sliding member satisfies L>L_{X}>L₀. Here, according to the use of the molding mold 5, L>L_{X}=L₀ or L>L₀>L_{X} can also be satisfied. Even if the runner R is curved as described above, since the sliding member 101 is arranged such that the advancing/retracting direction M of the sliding member 101 and the axis MR of the runner R intersect each other, the length (distance) L₀ of the runner R can be smaller than the movement distance L of the sliding member 101. Accordingly, the molding mold can be made compact.

From Fig. 12, it is found that the length (distance) L₀ of the runner R can be smaller than the movement distance L of the sliding member 101 in the case where the straight runner R and the sliding member 101 are attached such that the axis MR of the runner R is inclined with respect to the molded product P and the advancing/retracting direction M of the sliding member 101 is inclined with respect to the molded product P, and the advancing/retracting direction M of the sliding member 101 and the axis MR of the runner R intersect each other. Accordingly, the molding mold can be made compact. The sliding member 101 can also satisfy L>L_{X}>L₀, L>L_{X}=L₀, or L>L₀>L_{X} according to the purpose.

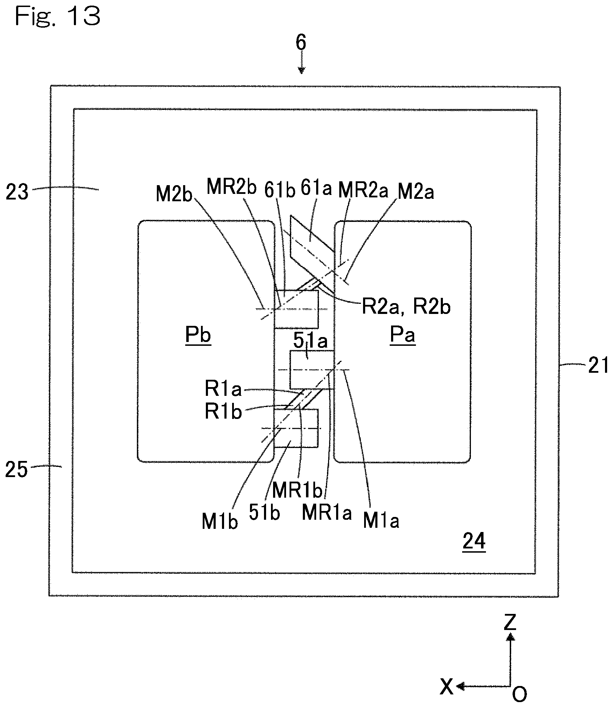

Fig. 13 is a plan view schematically showing the configuration of a molding mold 6 according to a sixth embodiment of the present invention. The same components as in the molding mold 1 according to the first embodiment shown in Fig. 1 to Fig. 5 are denoted by the same reference numerals, and the description thereof is omitted.

The molding mold 6 according to the sixth embodiment is a molding mold for taking two molded products, and the molded products Pa and Pb are arranged so as to be spaced apart from each other in the X-axis direction. In the molding mold 6 according to the sixth embodiment, the gate cutters 51a and 51b and the undercut molding cores 61a and 61b are involved in molding of the molded products Pa and Pb, respectively. In the present embodiment, the gate cutters 51a and 51b and the undercut molding cores 61a and 61b correspond to sliding members, but the types and combinations of the sliding members are not limited thereto. For example, two gate cutters 51 may be provided for one molded product P, two molding cores 61 may be provided for one molded product P, or the sliding members may be sliding cores, etc.

The positions in the Z-axis direction of the gate cutter 51a and the gate cutter 51b are different from each other, and an advancing/retracting direction M1a of the gate cutter 51a and an advancing/retracting direction M1b of the gate cutter 51b are parallel to the X axis. The positions in the Z-axis direction of the molding core 61a and the molding core 61b are different from each other. An advancing/retracting direction M2a of the molding core 61a intersects the X axis and the Z axis, and an advancing/retracting direction M2b of the molding core 61b is parallel to the X axis.

In the molding mold 6 according to the sixth embodiment, two runners R1a and R2a or R1b and R2b are connected to each of the molded products Pa and Pb. An axis MRla of the runner R1a and an axis MRlb of the runner R1b are arranged in a straight line. Similarly, an axis MR2a of the runner R2a and an axis MR2b of the runner R2b are arranged in a straight line.

Similar to the molding molds 1, 2, 3, 4, and 5 according to the first to fifth embodiments, in the molding mold 6 according to the sixth embodiment as described above, the gate cutters 51a and 51b which are the sliding members 101 are arranged such that the advancing/retracting directions (movement directions) M1a and M1b of the gate cutters 51a and 51b intersect the axes MRla and MRlb of the runners R1a and R1b, respectively, and the molding cores 61a and 61b which are the sliding members 101 are arranged such that the advancing/retracting directions (movement directions) M2a and M2b of the molding cores 61a and 61b intersect the axes MR2a and MR2b of the runners R2a and R2b, respectively. Therefore, the interval between the molded product Pa and the molded product Pb arranged right and left, in other words, the interval between the cavity portion Ca and the cavity portion Cb, can be shortened. Accordingly, the molding mold 6 can be made compact.

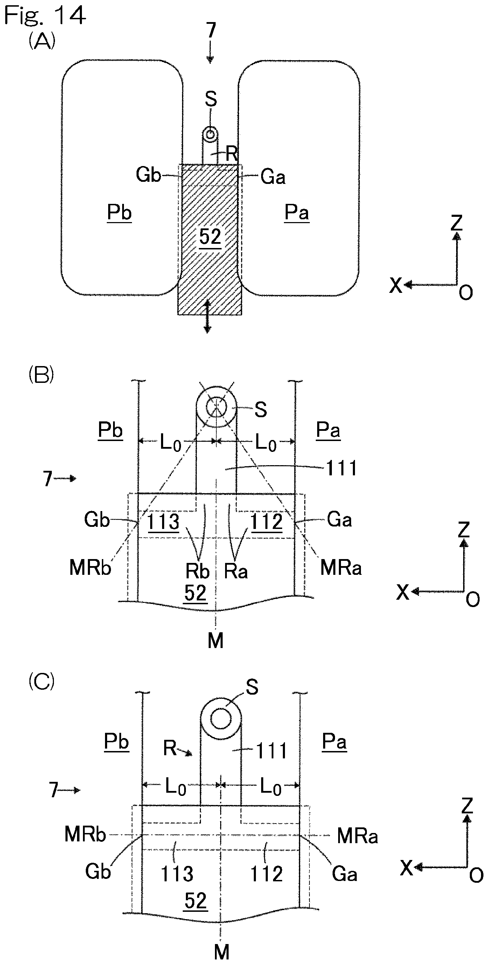

Fig. 14 shows schematic diagrams for describing the configuration of a molding mold 7 according to a seventh embodiment of the present invention and a relationship between the movement amount of a gate cutter 52 and the length of the runner R thereof. The same components as in the molding mold 1 according to the first embodiment shown in Fig. 1 to Fig. 5 are denoted by the same reference numerals, and the description thereof is omitted. In addition, the procedure for molding the molded products Pa and Pb by the molding mold 7 according to the seventh embodiment is basically the same as that by the molding mold 1 according to the first embodiment, and thus the description thereof is omitted. In the present embodiment, the molding mold 7 including the gate cutter 52 is illustrated, but the gate cutter 52 is just one type of sliding member, and the molding mold 7 may include a sliding member such as a molding core instead of the gate cutter 52.

The molding mold 7 according to the seventh embodiment of the present invention is an injection molding mold for taking two molded products, and includes a gate cutting mechanism. The two molded products Pa and Pb are arranged right and left with the sprue S located therebetween. The two molded products Pa and Pb have the same shape and size, and are arranged such that the long-side direction thereof is parallel to the Z axis and the short-side direction thereof is parallel to the X axis in a plan view. Here, the same applies to the case where the molded products Pa and Pb are read as the cavity portions Ca and Cb, respectively.

The runner R of the present embodiment includes a first flow path 111 extending from the sprue S in the negative Z direction, and a second flow path 112 and a third flow path 113 which are connected to an end of the first flow path 111 and arranged so as to be orthogonal to the first flow path 111. The second flow path 112 extends in the negative X direction, the third flow path 113 extends in the positive X direction, and the second flow path 112 and the third flow path 113 are arranged in a straight line so as to be parallel to the X axis. Ends of the second flow path 112 and the third flow path 113 are connected to the gates Ga and Gb, respectively. The runner R has an inverted T-shape as a whole in a plan view. The positional relationship between the sprue S and the runner R is not particularly limited.

When the portion from the sprue S to the gate Ga of the molded product Pa is defined as the runner Ra, the runner Ra includes the first flow path 111 and the second flow path 112. Similarly, when the portion from the sprue S to the gate Gb of the molded product Pb is defined as the runner Rb, the runner Rb includes the first flow path 111 and the third flow path 113. In this case, the axis MRa of the runner Ra and the axis MRb of the runner Rb are inclined with respect to the molded products Pa and Pb, respectively (see Fig. 14(B)).

Meanwhile, when the second flow path 112 is defined as the runner Ra, the axis MRa of the runner Ra is orthogonal to the molded product Pa. Similarly, when the third flow path 113 is defined as the runner Rb, the axis MRb of the runner Rb is orthogonal to the molded product Pb (see Fig. 14(C)).

The gate cutting mechanism is operable to cut the gates Ga and Gb connecting the molded products Pa and Pb and the runners Ra and Rb. The gate cutting mechanism includes the gate cutter 52 for cutting the gates Ga and Gb and a drive means (not shown) for moving the gate cutter 52. The drive means is as described for the molding mold 1 according to the first embodiment. The gate cutting mechanism of the present embodiment is configured to simultaneously cut the gate Ga connected to the runner Ra and the gate Gb connected to the runner Rb, with one gate cutter 52.

The gate cutter 52 advances/retracts parallel to the Z axis in a plan view (see Fig. 14(A)). Although the sprue S is located ahead in the travelling direction of the gate cutter 52, the gate cutter 52 stops before the sprue S and thus does not collide with the sprue S. In the molding mold 7 according to the present embodiment, the portion from the sprue S to the gate Ga of the molded product Pa may be defined as the runner Ra or the second flow path 112 may be defined as the runner Ra. In this case, the axis MRa of the runner Ra and the movement direction M of the gate cutter 52 intersect each other. The same applies to the runner Rb. The positional relationship between the sprue S and the runner R is not particularly limited. In the case where the sprue S is located on the runner R or in the negative Z-axis direction with respect to the runner R in a plan view, the gate cutter 52 has a shape in which this part is removed.

Due to the above, in the molding mold 7 according to the seventh embodiment, the portions from the sprue S to the gates Ga and Gb of the molded product Pa are defined as the runners Ra and Rb as shown in Fig. 14(B), the distances in the X-axis direction between the inlets and the outlets of the runners Ra and Rb are denoted by L₀, the movement amount of the gate cutter 52 is denoted by L, and the movement amount in the X-axis direction of the gate cutter 52 is denoted by L_{X}. In this case, L_{X}=0 is satisfied. Since the gate cutter 52 moves parallel to the molded products Pa and Pb, the movement amount of the gate cutter 52 can be freely set in a range where the gate cutter 52 does not collide with the sprue S. Therefore, L>L₀>L_{X} can be satisfied. Therefore, even if the movement amount L of the gate cutter 52 is set to be large, the interval between the molded product Pa and the molded product Pb can be narrowed.

In the molding mold 7 according to the seventh embodiment, as shown in Fig. 14(C), the runners Ra and Rb are formed as the second flow path 112 and the third flow path 113, respectively, the distances in the X-axis direction between the inlets and the outlets of the runners Ra and Rb are denoted by L₀, the movement amount of the gate cutter 52 is denoted by L, and the movement amount in the X-axis direction of the gate cutter 52 is denoted by L_{X}. In this case, the same conditions as in Fig. 14(B) are satisfied. That is, the runner Ra may be formed as the first flow path 111 + second flow path 112 or even if the runner Ra may be formed as the second flow path 112. In this case, the same result is obtained. The same applies to the runner Rb.

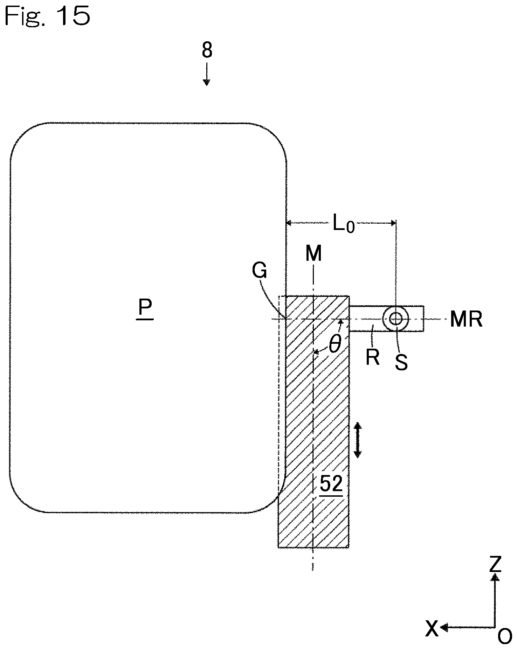

Fig. 15 is a schematic diagram for describing the configuration of a molding mold 8 according to an eighth embodiment of the present invention and a relationship between the movement amount of the gate cutter 52 and the length of the runner R thereof. The same components as in the molding mold 1 according to the first embodiment shown in Fig. 1 to Fig. 5 are denoted by the same reference numerals, and the description thereof is omitted. In addition, the procedure for molding the molded product P by the molding mold 8 according to the eighth embodiment is basically the same as that by the molding mold 1 according to the first embodiment, and thus the description thereof is omitted. In the present embodiment, the molding mold 8 including the gate cutter 52 is illustrated, but the gate cutter 52 is just one type of sliding member, and the molding mold 8 may include a sliding member such as a molding core instead of the gate cutter 52.

The molding mold 8 according to the eighth embodiment of the present invention is an injection molding mold for taking one molded product, and includes a gate cutting mechanism. The molded product P is arranged such that the long-side direction thereof is parallel to the Z axis and the short-side direction thereof is parallel to the X axis in a plan view. Here, the same applies to the case where the molded product P is read as the cavity portion C. The runner R is arranged parallel to the X axis, and is orthogonal to the molded product P (the long-side direction of the molded product P).

The gate cutting mechanism is operable to cut the gate G connecting the molded product P and the runner R. The gate cutting mechanism includes the gate cutter 52 for cutting the gate G and a drive means (not shown) for moving the gate cutter 52. The drive means is as described for the molding mold 1 according to the first embodiment. The gate cutter 52 advances/retracts parallel to the Z axis in a plan view. Therefore, the axis MR of the runner R and the movement direction M of the gate cutter 52 intersect (are orthogonal to) each other, and an intersection angle θ therebetween is 90°.

In the molding mold 8 according to the eighth embodiment as well, similar to the molding mold 7 according to the seventh embodiment, the distance in the X-axis direction between the inlet and the outlet of the runner R is denoted by L₀, the movement amount of the gate cutter 52 is denoted by L, and the movement amount in the X-axis direction of the gate cutter 52 is denoted by L_{X}. In this case, L_{X}=0 is satisfied. In addition, since the gate cutter 52 moves parallel to the molded product P and does not collide with the sprue S, L>L₀>L_{X} can be satisfied. Therefore, even if the movement amount L of the gate cutter 52 is set to be large, the length of the runner R can be shortened.

In each of the molding mold 7 according to the seventh embodiment and the molding mold 8 according to the eighth embodiment, whereas the gate cutter 52 which is a sliding member moves parallel to the molded product P, the runner R is orthogonal to the molded product P. Therefore, the axis MR of the runner R and the movement (advancing/retracting) direction M of the sliding member are orthogonal to each other, and the axis MR of the runner R and the movement (advancing/retracting) direction M of the sliding member intersect each other, which is the same as in the molding molds according to the other embodiments of the present invention, so that the molding mold can be made compact.

As described above for the molding molds 1 to 8 according to the first to eighth embodiments and the modification of the molding mold 3 according to the third embodiment, by arranging the sliding member such that the advancing/retracting direction (movement direction) of the sliding member and the axis connecting the inlet and the outlet of the runner intersect each other, the molding mold can be made compact.

Although the molding mold according to the present invention has been described by means of the molding molds according to the first to eighth embodiments and the modifications thereof, the present invention is not limited to the above embodiments, and may be modified without departing from the gist of the invention, and the modified ones can be used.

In the molding mold 1 according to the first embodiment, the long-side direction of the molded product P is parallel to the Z axis, but the molded product P may be arranged such that the short-side direction thereof is parallel to the Z axis. In the molding mold according to the present invention, the arrangement, the shape, and the size of the molded product P are not particularly limited. In addition, in the molding mold 1 according to the first embodiment, the gate G is cut after mold opening, but the gate G may be cut in a mold-closed state.

Also, in the molding mold including the gate cutter 51a (51b) which protrudes from the molded product Pa (Pb) in the mold-closed state and moves toward the molded product Pa (Pb) side when cutting the gate Ga (Gb), if the gate cutter 51a (51b) is arranged such that the advancing/retracting direction Ma (Mb) of the gate cutter 51a (51b) is inclined with respect to the axis (MRa, MRb) of the runner Ra (Rb), the interval between the molded product Pa and the molded product Pb arranged right and left, in other words, the interval between the cavity portion Ca and the cavity portion Cb, can be shortened. Accordingly, the molding mold can be made compact. The same applies to a molding mold including an undercut molding core.

In the molding molds according to the first to eighth embodiments and the modifications thereof, the mold opening direction is parallel to the Y axis, and the movable-side die plate is arranged such that the upper surface 24 thereof is parallel to the XZ plane, but the mold opening direction and the arrangement of the molding mold according to the present invention are not particularly limited. The molding mold according to the present invention may be used such that the mold opening direction is a horizontal direction (right-left direction, parallel to the X axis) or the mold is opened in a direction that intersects the X axis and the Y axis.

Although the molding mold according to the present invention has been described using the injection molding mold in the above embodiments, the molding mold according to the present invention is not limited to the injection molding mold and can be suitably applied to die-casting molds and other molding molds. The material (molding material) of the molded product P is also not particularly limited.

In the above embodiments, the gate cutters and the molding cores of the undercut are shown as the sliding members, but the sliding members also include a tearing piece that slides through a drive means and tears a gate. In addition, in the molding mold, there is also a demand for applying a load to the gate or stretching or cracking the gate by sliding a member. Such a member can also be included in the sliding members of the molding mold according to the present invention.

In the molding mold according to the sixth embodiment, two runners R and two sliding members are provided for one molded product, but each of the number of runners R and the number of sliding members for one molded product may be three or more. In addition, the number of runners R and the number of sliding members for one molded product may be different from each other.

In each of the above embodiments, the molding mold in which the number of molded products to be taken is one or two has been described, but the number of molded products to be taken may be three or more.

In the molding mold according to the present invention, the runner system is not particularly limited. If the number of molded products to be taken is three or more and the molded products are the same, a spoke-type runner may be used, and the molded products may be arranged at equal distances from the sprue S. If a runner system having balanced flowability is used, the molding mold according to the present invention can be used for molding molded products having different sizes and shapes.

In the molding mold according to the present invention, the type of the gate G is not particularly limited. Various gates such as side gates, overlap gates, and submarine gates can be used. In addition, as the runner, hot runners can also be used in addition to cold runners.

Sliding members, such as the gate cutters and molding cores shown in the first and second embodiments of the present invention, which are attached to and used in the molding mold according to the present invention, or sliding units each of which includes a sliding member and is attached to and used in the molding mold according to the present invention, such as a unit including the molding core shown in the second embodiment of the present invention, are included in the scope of the right of the present invention.

In the molding mold according to the present invention, the corners and the side edges of each component may be, for example, rounded or chamfered. In addition, the materials of the components used in the molding mold according to the present invention are not limited to specific materials. The sliding surface of each component is preferably formed from a material that has good slidability or a material that has been subjected to favorable surface treatment.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### Reference Numerals

- 1, 2, 3, 4, 5, 6, 7, 8: molding mold
- 11: stationary die
- 21: movable die
- 31: ejector mechanism
- 33: ejector base plate
- 51, 51a, 51b, 52: gate cutter
- 61, 61a, 61b: molding core
- 101: sliding member
- 111: first flow path
- 112: second flow path
- 113: third flow path
- G, Ga, Gb: gate
- L: movement amounts of gate cutter and sliding member
- L_{X}: movement amounts in X direction of gate cutter and sliding member
- L₀: length (distance) of runner
- M: advancing/retracting direction of sliding member
- Ma, Mb: advancing/retracting direction of gate cutter
- MR, MRa, MRb: axis of runner
- P, Pa, Pb: molded product
- P1: undercut portion
- R, Ra, Rb: runner
- Ra_{I}, Rb_{I}: runner inlet
- Raₒ, Rbₒ: runner outlet
- S: sprue
- θ: intersection angle

## Claims

1. A molding mold in which a gate is provided at an outlet of a runner and connected to a cavity portion, and a molding material is fed from an inlet of the runner to fill the cavity portion to mold a molded product, the molding mold comprising
a sliding member attached to the molded product so as to be able to advance/retract, wherein
the sliding member is attached such that an advancing/retracting direction thereof intersects an axis connecting the inlet and the outlet of the runner, and collision of the sliding member with another member or another sliding member is avoidable.

2. The molding mold as claimed in claim 1, wherein
the runner is arranged such that the axis connecting the inlet and the outlet of the runner is orthogonal to the molded product, and
the sliding member is attached such that the advancing/retracting direction thereof is non-orthogonal to the molded product.

3. The molding mold as claimed in claim 1 or 2, wherein, when a distance in an X-axis direction between the inlet and the outlet of the runner is denoted by L₀, a movement amount of the sliding member is denoted by L, and a movement amount in the X-axis direction of the sliding member is denoted by Lx,
the sliding member satisfies a condition of L>L_{X}>L₀, L>L_{X}=L₀, or L>L₀>L_{X}.

4. The molding mold as claimed in claim 1, wherein
the runner is arranged such that the axis connecting the inlet and the outlet of the runner is non-orthogonal to the molded product, and
the sliding member is attached such that the advancing/retracting direction thereof is orthogonal or non-orthogonal to the molded product.

5. The molding mold as claimed in claim 1 or 4, wherein, when a distance in an X-axis direction between the inlet and the outlet of the runner is denoted by L₀, a movement amount of the sliding member is denoted by L, and a movement amount in the X-axis direction of the sliding member is denoted by L_{X},
the sliding member satisfies a condition of L=L_{X}>L₀.

6. The molding mold as claimed in any one of claims 1 to 5, wherein
the number of the molded products to be taken is one or more,
the number of the runners attached for each molded product is one or more, and
the number of the sliding members attached for each molded product is one or more.

7. The molding mold as claimed in any one of claims 1 to 6, wherein
the molding mold is an injection molding mold,
the molding mold includes a sprue connected to the inlet of the runner,
the number of the molded products to be taken is two or more,
the molded products are arranged opposite to each other with the sprue located therebetween, or arranged at equal distances from the sprue with the sprue located therebetween,
the number of the runners attached for each molded product is one or more, and
the number of the sliding members attached for each molded product is one or more.

8. The molding mold as claimed in any one of claims 1 to 7, wherein the sliding member is a molding core for forming an undercut portion of the molded product, a gate cutter for cutting the gate, or a tearing piece for tearing the gate.

9. The molding mold as claimed in any one of claims 1 to 8, wherein
the number of the molded products to be taken is two or more,
the number of the sliding members attached for each molded product is one or more, and
when each sliding member draws a sphere with a farthest distance of the sliding member before and after movement as a radius and with an endpoint on the runner outlet side of the sliding member before movement as a center point,
the spheres drawn on the basis of the respective sliding members overlap each other, and the respective sliding members do not interfere with each other before, during, and after movement.

10. The molding mold as claimed in any one of claims 1 to 9, wherein
the advancing/retracting direction of the sliding member intersects a direction in which the molding material remaining at the gate and/or the runner is taken out, and
the sliding member is moved to allow the molding material remaining at the gate and/or the runner to be taken out.

11. The sliding member or a sliding unit comprising the sliding member, the sliding member or the sliding unit being incorporated and used in the molding mold as claimed in any one of claims 1 to 10.
